# EUROPEAN PATENT SPECIFICATION

(11) **EP 4 594 834 B1**
(45) Date of publication and mention of the grant of the patent: **23.09.2026**
(21) Application number: 23734774.5
(22) Date of filing: 16.06.2023
(51) Int. Cl.: G05D 1/242, G05D 1/246, G05D 1/622

(54) **IMPROVED NAVIGATION FOR A ROBOTIC WORK TOOL**
VERBESSERTE NAVIGATION FÜR EIN ROBOTISCHES ARBEITSWERKZEUG
NAVIGATION AMÉLIORÉE POUR OUTIL DE TRAVAIL ROBOTIQUE

(30) Priority: 30.09.2022 SE 2251131
(43) Date of publication of application: 06.08.2025
(73) Proprietor: Husqvarna AB, 561 82 Huskvarna (SE)
(72) Inventor: JOHANSSON, Marcus, 55308 Jönköping (SE); JANSSON, Viktor, 55320 Jönköping (SE); FRÖLING, Douglas, 554 53 Jönköping (SE); KARA, Dilen, 55632 Jönköping (SE); LILJEDAHL, Dan, 55459 Jönköping (SE); SVENSSON, Erica, 55320 Jönköping (SE)
(86) International application number: PCT/SE2023/050606
(87) International publication number: WO 2024/072271

(56) References cited:
- WO-A1-00/74465
- CN-A- 102 541 056
- US-A1- 2005 010 331
- US-A1- 2017 075 353

## Description

### TECHNICAL FIELD

This application relates to a robotic work tool, and a method for providing an improved navigation for the robotic work tool.

### BACKGROUND

Automated or robotic work tools are becoming increasingly more popular and so is the use of the robotic work tool in various types of operational areas.

Such operational areas, in particular for robotic lawnmowers, often include sensitive areas, such as flower beds or neighboring plots of land. Furthermore, there are many user preferences as it comes to how the lawn should be cut so that undesired patterns are not formed and/or that desired patterns are in fact formed. The requirements for an efficient navigation that leaves no tracks or leaves intended track patterns are therefore very high.

Contemporary robotic work tools, often relying on satellite navigation, allows for precise navigation where an operating area can be operated systematically based on a map or other digital representation of the operating area, such as a garden. The map may be created by a user, it may be created by a server, or it may be created by the robotic work tool when operating or otherwise traversing the operating area. Such (initial) maps may not contain all obstacles actually present, or additional obstacles may have been introduced since the map was created.

Such additional obstacles will upset any planned operation in the operating area and the robotic work tools need to have contingencies for how to handle such unexpected obstacles while maximizing lawn coverage and minimizing operating time and/or operating resources.

The patent document published as US2005/010331A1 discloses a robot cleaner is described that cleans a room using a serpentine room clean and a serpentine localized clean. Sensors can include an object following sensor, a stairway detector and bumper sensors.

The patent document published as US2017/075353A1 discloses a local obstacle avoidance walking method of a self-moving robot, comprising: step 100: the self-moving robot walks in a first direction, and when an obstacle is detected, the self-moving robot translates for a displacement M1 in a second direction perpendicular to the first direction, and step 200: determining whether the self-moving robot is able to continue to walk in the first direction after the translation, if a result of the determination is positive, the self-moving robot continues to walk in the first direction, and if the result of the determination is negative, the self-moving robot acts according to a preset instruction. The method enables the robot to accurately avoid a local obstacle, provides a concise walking route, shortens the determination time, and improves the working efficiency of the self-moving robot.

The patent document published as CN102541056A discloses an obstacle processing method for a robot. The robot performs X-axis or Y-axis scanning cleaning in a cleaning area for the first time, and records a non-cleaned area behind an obstacle; after finishing performing the X-axis or Y-axis scanning cleaning for the first time, the robot returns to the non-cleaned area behind the obstacle, and performs X-axis or Y-axis scanning cleaning for the second time; and the robot records X-axis coordinates and Y-axis coordinates when touching the obstacle and detecting that the obstacle disappears to adjust a walking route. According to the obstacle processing method, the number of walking routes is small during identification of obstacles; the obstacles can be judged accurately; and an effect of automatically cleaning by a dust remover is achieved.

The patent document published as WO00/74465A1 a owing apparatus has cutting means and drive means for propelling the apparatus along a route. Navigation means determines the position of the apparatus and obstacle detection means detects obstacles in the route. Control means, in response to information from the navigation means and obstacle detection means, controls the operation of the drive means thereby to propel the apparatus along the route with the deviations necessary to circumnavigate detected obstacles. The navigation means includes signal detectors responsive to a beacon signal emitted from a base station. The obstacle detection means includes mechanical obstruction detectors and detectors responsive to colour changes in the terrain beneath or adjacent the apparatus, indicative of an obstruction.

Prior art solutions provide for turning at an obstacle and proceeding along the plan. However, such turning can both lead to an area close to the obstacle being unserviced and/or that the robotic work tool becomes entangled or otherwise stuck in the obstacle.

Thus, there is a need for an improved manner of handling unaccounted for obstacles.

### SUMMARY

It is an object of the teachings of this application to overcome or at least reduce the problems of the prior art and to provide a manner of handling unexpected obstacles, while performing systematic operation along parallel operating lines which maximizes area coverage and reduces the risk of getting entangled or otherwise stuck.
In some aspects this is provided by a robotic work tool configured to operate in an operating area in parallel operation lines, the robotic work tool comprising an obstacle sensor and a controller, wherein the controller is configured to: operate along a first operation line in a first direction; detect a first obstacle blocking the first operation line based on the obstacle sensor; note the first operation line as being blocked in the first direction; reverse the robotic work tool and switch to an adjacent second operation line; operate along the second operation line in the first direction; and determine that the robotic work tool has reached an end side of the operating area and return to the first operation line and operate along the first operation line in a second direction as per the appended claims.

It should be pointed out that the robotic work tool is configured to reverse and switch in combination. Of course the robotic work tool may reverse in other circumstances without switching, and may also switch in other circumstances without reversing, but under the circumstances as discussed herein, the robotic work tool reverses and switches as a combined navigation. Possibly in different orders, but always combined. This is clear from the following detailed description where reversing and switching is always discussed in combination and without intervening navigational actions.

In some embodiments the controller is further configured to: detect a second obstacle blocking the first operation line in the second direction; note the first operation line as being blocked in the second direction; navigate the robotic work tool to an in-between area between the first and the second obstacle; and operate in the in-between area.

In some embodiments the controller is further configured to: note a location of the first obstacle; note a location of the second obstacle; enter the robotic work tool through a half-way point of the in-between area.

In some embodiments the controller is further configured to, when detecting the second obstacle blocking the first operation line in the second direction then reverse the robotic work tool and switch to an adjacent operation line and operate along that operation line in the second direction prior to operating in the in-between area

In some embodiments the controller is further configured to: note the location of the first obstacle; note the location of the second obstacle; determine the extent of the in-between area based on the location of the first obstacle and the location of the second obstacle.

In some embodiments the controller is further configured to determine that the distance between the first obstacle and the second obstacle exceeds a threshold obstacle distance and then operate in the in-between area.

In some embodiments the controller is further configured to operate in the in-between area by operating along an area operation line from a point a distance away from one side of the area and out towards the side or out towards the opposite side of the area. In some embodiments the distance is the middle of the area. In some embodiments the distance is 1/3rd, 1/4th or 1/5th of the area. In some embodiments the distance is 0.5, 1, 1.5, 2 or 2.5 times the length of the robotic work tool.

In some embodiments the controller is further configured to: operate along the second operation line in the first direction and detect the first obstacle blocking also the second operation line; note the second operation line as being blocked in the first direction; reverse the robotic work tool and turn; and operate along the second operation line in the second direction.

In some embodiments the controller is further configured to operate along the second operation line in the second direction from the opposite side and detect the second operation line being blocked; note the second operation line as being blocked in the first direction; reverse the robotic work tool and switch to an adjacent third operation line; and operate along the third operation line in the first direction.

In some embodiments the controller is further configured to when returned to the first operation line then operate along the second operation line in the second direction.

In some embodiments the controller is further configured to reverse the robotic work tool and change to an adjacent second operation line by reversing along the first operation line and then switching to the second operation line while moving forwards.

In some embodiments the controller is further configured to reverse the robotic work tool and change to an adjacent second operation line by switching to the second operation line while reversing.

In some embodiments the controller is further configured to determine that the robotic work tool is operating on a slope and then selecting the manner of reversing and switching accordingly.

In some embodiments the robotic work tool is a robotic lawnmower.

In some embodiments the robotic work tool is a robotic grinder.

According to some aspects the object is achieved by providing a method for use in a robotic work tool system as claimed, wherein the method comprises: operating along a first operation line in a first direction; detecting a first obstacle blocking the first operation line based on the obstacle sensor; noting the first operation line as being blocked in the first direction; reversing the robotic work tool and switch to an adjacent second operation line; operating along the second operation line in the first direction; and determining that the robotic work tool has reached an end side of the operating area and returning to the first operation line and operating along the first operation line in a second direction as per the appended claims.

The teachings herein bring about many advantages for example both through the use of dividing operating lines and operating them in opposite direction as well as through the use of operating between obstacles (i.e. double-blocked operating lines) from the middle and outwards increases coverage in complex gardens with multiple unmarked obstacles.

The teachings herein also bring about many advantages for example through the reverse and switch to another operating line as it is faster, ensures that the area close to an obstacle is properly serviced and produces less wear.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool according to some example embodiments of the teachings herein;
Figure 2 shows a schematic view of a robotic work tool system according to some example embodiments of the teachings herein;
Figures 3A - 3H each shows a schematic view of a robotic work tool system according to some example embodiments of the teachings herein;
Figures 3I shows a schematic view of an enlargement of an area between two obstacles in a robotic work tool system according to some example embodiments of the teachings herein; and
Figure 4 shows a corresponding flowchart for a method according to some example embodiments of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic work tools, the teachings herein may also be applied to, robotic ball collectors, robotic mine sweepers, robotic farming equipment, or other robotic work tools.

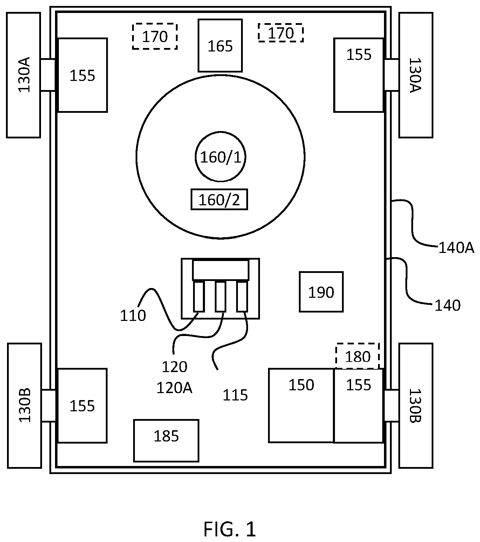

Figure 1 shows a schematic overview of a robotic work tool 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic work tool may be of different sizes, where the size ranges from merely a few decimetres for small garden robots, to even more than 1 meter for large robots arranged to service for example airfields.

It should be noted that even though the description herein is focussed on the example of a robotic work tool, the teachings may equally be applied to other types of robotic work tools, such as robotic watering tools, robotic golf ball collectors, and robotic mulchers to mention a few examples. It should be noted also that even if the description herein is focussed on the robotic work tool, a skilled person would be able to implement the teachings herein, having taken part of them, in another type of robotic work tool - especially for gardening purposes - as many components are shared between such robotic work tools.

It should also be noted that the robotic work tool is a self-propelled robotic work tool, capable of autonomous navigation within an operational area, where the robotic work tool propels itself across or around the operational area in a pattern (random or predetermined).

The robotic work tool 100, exemplified as a robotic work tool 100, has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic work tool 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic work tool 100 in different manners. The wheels, the motor 155 and possibly the battery 150 are thus examples of components making up a propulsion device. By controlling the motors 155, the propulsion device may be controlled to propel the robotic work tool 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic work tool 100 also comprises a work tool 160 which, in the example of the robotic work tool 100 being a robotic lawnmower, is a grass cutting device 160, such as a rotating blade 160/2 driven by a cutter motor 160/1. In embodiments where the robotic work tool 100 is exemplified as an automatic grinder, the work tool 160 is a rotating grinding disc.

The robotic work tool 100 also comprises an obstacle sensor 165. The obstacle sensor may comprise one or more sensors. Examples of such sensors are collision sensors (that detect an object by colliding with it), range finders (that detect an obstacle by detecting an object at a short range in front of the robotic work tool 100), image sensors (that detect an obstacle through image analysis) to mention a few examples.

The robotic work tool 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic work tool 100 including, but not being limited to, the propulsion and navigation of the robotic work tool.

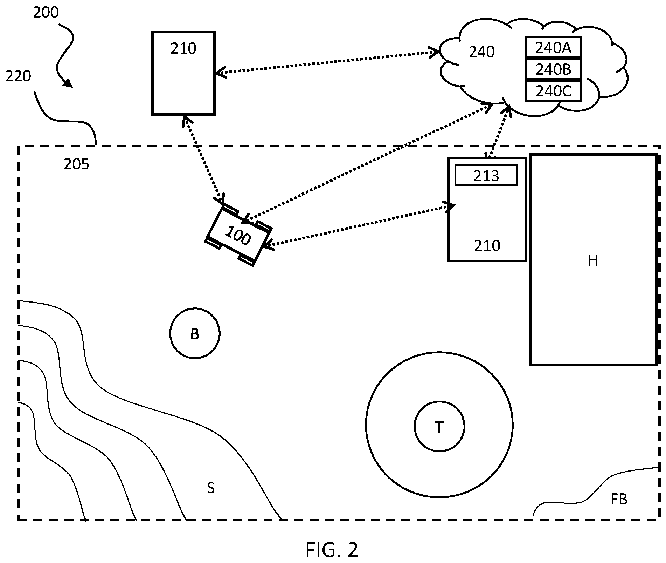

The memory 120 is also configured to store a map 120A and/or other navigation information for a operational area (referenced 205 in figure 2). In some embodiments, the memory 120 is configured to store navigation information 120A such as an operation pattern enabling the robotic work tool 100 to operate in the operational area systematically.

The controller 110 in combination with the electric motor 155 and the wheels 130 forms the base of a navigation system (possibly comprising further components) for the robotic work tool, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic work tool 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic work tool 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment.

The robotic work tool 100 comprises a satellite signal navigation receiver 190 configured to provide navigational information (such as position) based on receiving one or more signals from a satellite - possibly in combination with receiving a signal from a base station. In some embodiments the satellite navigation receiver 190 is a Real-Time Kinetics (RTK) receiver. In some embodiments the satellite navigation receiver 190 is a Global Positioning System (GPS) receiver. In some embodiments the satellite navigation receiver 190 is a Global Navigation Satellite System (GNSS) receiver. This enables the robotic work tool to operate in an operational area bounded by a virtual border (not shown explicitly in figure 2 but deemed to be included in the boundary 220) and to do so by following an operational pattern.

For enabling the robotic work tool 100 to navigate with reference to a wire, such as a boundary wire or a guide wire, emitting a magnetic field caused by a control signal transmitted through the wire, the robotic work tool 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2 but deemed to be included in the boundary 220) enclosing an operational area (referenced 205 in figure 2). Such navigation may be supplemental or alternative to the navigation based on the satellite receiver 190.

The robotic work tool 100 may also in some embodiments comprise deduced reckoning sensors 180. The deduced reckoning sensors may be odometers, accelerometers or other deduced reckoning sensors. Such deduced-reckoning navigation may be supplemental or alternatives to the navigation based on the satellite receiver 190.

As mentioned above, the robotic work tool 100 is in some embodiments arranged to operate according to a map application 120A representing one or more operational areas (and possibly the surroundings of the operational area(s)) as well as features of the operational area(s) stored in the memory 120 of the robotic work tool 100. In some embodiments, the map is also or alternatively stored in the memory of a server (referenced 240 in figure 2). The map application may be generated or supplemented as the robotic work tool 100 operates or otherwise moves around in the operational area. In some embodiments, the map application is downloaded or otherwise received, possibly from the server. In some embodiments, the map application also includes one or more transport areas (not shown). The robotic work tool 100 is arranged to navigate according to the map based on the Satellite receiver 190, possibly in combination with the deduced reckoning sensors 180 and/or the magnetic field sensor(s) 170.

In addition to - or as an alternative to- the map application 120A other navigation information may be stored, such as an operating pattern - or instructions for how to execute such a pattern, and/or locations of obstacles.

The robotic work tool also comprises a user interface 185 for receiving commands and/or settings from an operator or user. In some embodiments the user interface 185 comprises a physical interface such as a display and/or one or more buttons (possibly virtual keys implemented on the display). In some embodiments the user interface 185 comprises remote interface such as a connection to a cellular user equipment such as a tablet computer and/or a smartphone (referenced 250 in figure 2) via the communication interface 115. In some embodiments the user interface 185 comprises both a physical interface as well as a remote interface.

Figure 2 shows a robotic work tool system 200 in some embodiments. The schematic view is not to scale. The robotic work tool system 200 comprises one or more robotic work tools 100 (only one is shown) according to the teachings herein arranged to operate in one or more operational areas 205 bounded by a boundary 220. It should be noted that the operational area 205 shown in figure 2 is simplified for illustrative purposes.

The view of the operational area 205 is also intended to be an illustration or graphical representation of the map application 120A discussed in the above.

As discussed in relation to figure 1 the robotic work tool system may be a robotic work tool system or a system comprising a combination of one or more robotic work tools, and other robotic work tools.

As is shown in figure 2 there may be obstacles such as houses, structures, trees to mention a few examples in the operational area 205. In figure 2 such obstacles are indicated and referenced H (as in house). There may also be one or more irregularities in the surface of the operational area, which are exemplified in figure 2 as a house H, a slope S, a boulder B, a tree T and a flower bed FB.

A server 240 is shown as an optional connected device for the robotic work tool 100 to communicate with - possibly for receiving maps or map updates. The server 240 comprises a controller 240A for controlling the operation of the server 240, a memory 240B for storing instructions and data relating to the operation of the server 240 and a communication interface 240C for enabling the server 240 to communicate with other entities, such as the robotic work tool 100, the charging station 210 and/or a User Equipment such as a mobile phone, possibly acting as an intermediary between the ser4ver and the robotic work tool 100. The controller, the memory and the communication interface may be of similar types as discussed in relation to figure 1 for the robotic work tool 100. It should be noted that any processing may be done in any, some or all of the controller 110 of the robotic work tool 100 and/or the controller 240A of the server 240 and that the processing may also be done partially in one controller 110/240A for supplemental processing in the other controller 110/240A. This is indicated in figure 2 in that a dashed arrow is shown between the server 240 and the robotic work tool 100 for indicating that information may be passed freely between them for (partial) processing.

The robotic work tool system 200 also comprises a charging station 210. In some embodiments where the robotic work tool 100 is arranged to operate according to a boundary wire 220 emitting a magnetic field, the charging station 210 also comprises a signal generator arranged to generate a control signal and to transmit the control signal through the boundary wire, thereby generating the magnetic field that is to be sensed by the robotic work tool 100.

In some embodiments the charging station also comprises a communication interface 213. The communication interface 213 is, in some embodiments, configured to establish an indirect connection between the robotic work tool 100 and the server 240 for relaying information between the two, such as map data and patterns for operation.

As is also indicated in figure 2, a user device 250 may be connected to the robotic work tool 100, which user device can act as a server, as a controlling device, a user interface or as an intermediary for connecting to the server.

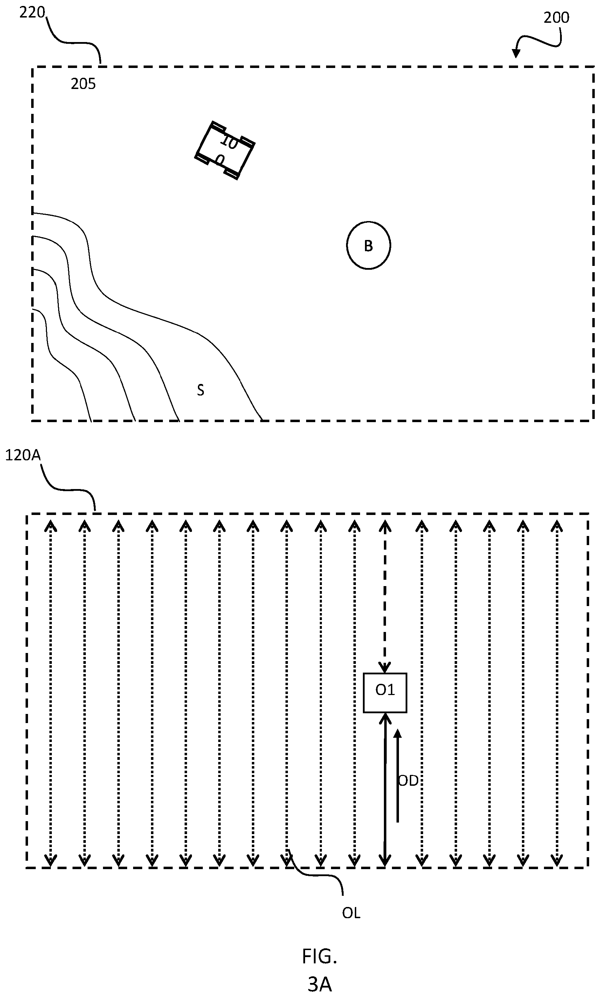

Figure 3A shows a schematic view of a robotic work tool system 200 as in figure 2, but where fewer features are shown so as not to cloud the illustration. Along with the schematic view of the robotic work tool system and the operational area 205, is a graphical representation of the map data 120A where an operating pattern has been plotted. In this example the operating pattern comprises a plurality of parallel operating lines (referenced OL) that the robotic work tool is to operate along and in turn. Such operation may be performed based on the satellite receiver 190 and/or the deduced reckoning sensor(s) 180. In some embodiments the operating lines are added to the map data 120A. In some embodiments, the operating lines are not part of the map data, but the robotic work tool is configured to operate in a manner that generates such lines, for example through a series of instructions. One example of such instructions is:
START: PROPEL FORWARDS
DETECT BOUNDARY
TURN 90 DEGREES
PROPEL X METERS
TURN 90 DEGRESS
GOTO START

The operating lines can be direction-specific, or as indicated in figure 3A by the double-headed arrows, be operable in either direction.

As is also indicated in figure 3A, the map application 120A is, in some embodiments, configured to store a location of an obstacle (O1). The location of the obstacle is in some embodiments, the location where the robotic work tool 100 detected the obstacle. The map application 120A is also in some embodiments, configured to store data for determining if an operating line is fully completed, partially completed, or not completed. In some embodiments, a partially completed operating line may be represented by the completed part of the operating line (as indicated by the full operating line in figure 3A) and by an uncompleted operating line (as indicated by the dashed line in figure 3A). Alternatively, an operating line is simply indicated to be completed, partially completed and not completed (as in not started yet).

Some of the operating lines are also associated with a direction of operation, as is indicated by the arrow referenced OD next to the completed operating line in figure 3A. Such a direction of operation indicates which direction the robotic work tool was operating in when operating on the (partially completed) operating line. In some embodiments, a (partial) operating line is thus associated with a direction.

In some embodiments, a (partial) operating line is not associated with a direction and the remaining portion(s) of the operation can be operated on in any suitable direction.

In some embodiments, the map application 120A stores the status of all operating lines. In some embodiments the map application only stores the operating lines which are partially completed - along with the direction of operation (OD).

The distance between two operating lines are typically the same as or smaller than the width of the cutting device so as to provide an overlap of operation between the operating lines.

As is also indicated in figure 3A, there is a start side of the operating area 205 and an end side of the operating area 205 indicating a side where the robotic work tool 100 starts operating and where it ends operating. Although the two sides area opposite one another in the example of figure 3A, they need not be but can be anywhere in the operating area, even at the same location. Also, even though the start sides and end sides area indicated and referenced as sides of the operating area, they need not be a side, but can be a portion of a side, or simply a location or area from where the robotic work tool 100 starts and to where it ends or finishes.

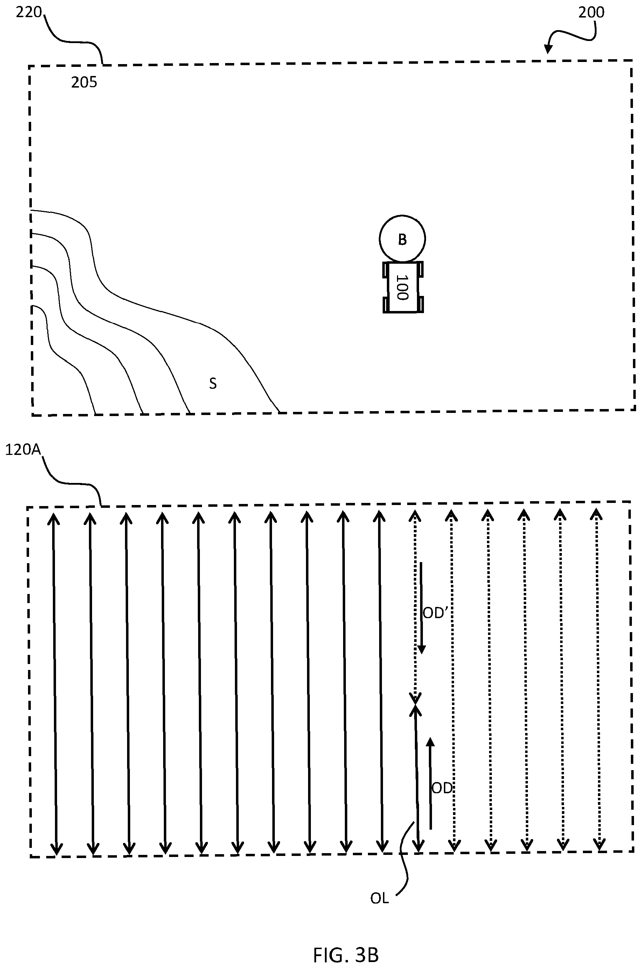

Figure 3B shows an example where the robotic work tool 100 has (successfully) traversed one or more operating lines which are all marked as completed in the map application 120A. As discussed above, such an indication can be made by not making a specific note. In this example, the robotic work tool 100 has detected an obstacle through the obstacle sensor(s) 165, such as by colliding with the obstacle, which in this case is a boulder B. The location of the obstacle is noted in the map application 120A. In some embodiments, the location is noted as the location of the robotic work tool upon detecting the obstacle B. In some such embodiments, the location of the obstacle is indirectly noted by noting the end of the (partially completed) operating line.

The operating line is noted as partially competed along with the current operating direction as is indicated by the bold line for the operating line along with the operating direction OD.

In some embodiments the remaining section of the operating line is also noted, possibly in combination with the opposite operating direction OD'.

The robotic work tool then reverses and switches over to the next adjacent (or second) operating line. The switch is in some embodiments made by reversing and then switching lines while moving forwards. The switch is in some embodiments made by switching lines while reversing. The manner chosen has different benefits depending on the design of the robotic work tool, most notably as concerns the placement of the cutter and the driving and steering of the robotic work tool 100. In some embodiments the robotic work tool 100 is configured to determine that it is currently on a slope S, and in response thereto determine the manner of reversing and switching based on the incline of the slope. The robotic work tool 100 will - depending on its design - have different capabilities to turn and/or reverse if it is in a downward slope or if it is in an upward slope. Of course, the steeper the slope, the more this affects the robotic work tool's capabilities of manoeuvring. The robotic work tool is therefore, in some embodiments, configured to determine that it is in a slope and select the manner of reversing and switching accordingly. In some such embodiments, the robotic work tool is further configured to determine that the incline of the slope exceeds a threshold incline (for example 1%, 2%, 3%, 4%, 5% or 10% or any range there in between) and in response thereto determine that the robotic work tool is in a slope and select the manner of reversing and switching accordingly.

The switch is in some embodiments made by first reversing a distance of for example 0.5, 1, 1.5 or 2 meters before initiating the switch. This has the benefit of distancing the robotic work tool from the obstacle along a known path thereby reducing risk of entanglement of the robotic work tool with the obstacle.

By reversing and switching - as compared to turning - the robotic work tool is enabled to ensure that the area close to the obstacle is properly serviced, reduce the risk of getting entangled in the obstacle and also reduce the wear to the operating area as a short radius 180 degree turn is more forceful than a reverse and switch, whereas a long radius 180 degree turn leaves areas unserviced.

Reversing and switching also has a more predictable outcome as a turn may be more severely influenced by external factors (for example slippage) making it more difficult to properly align to operating lines.

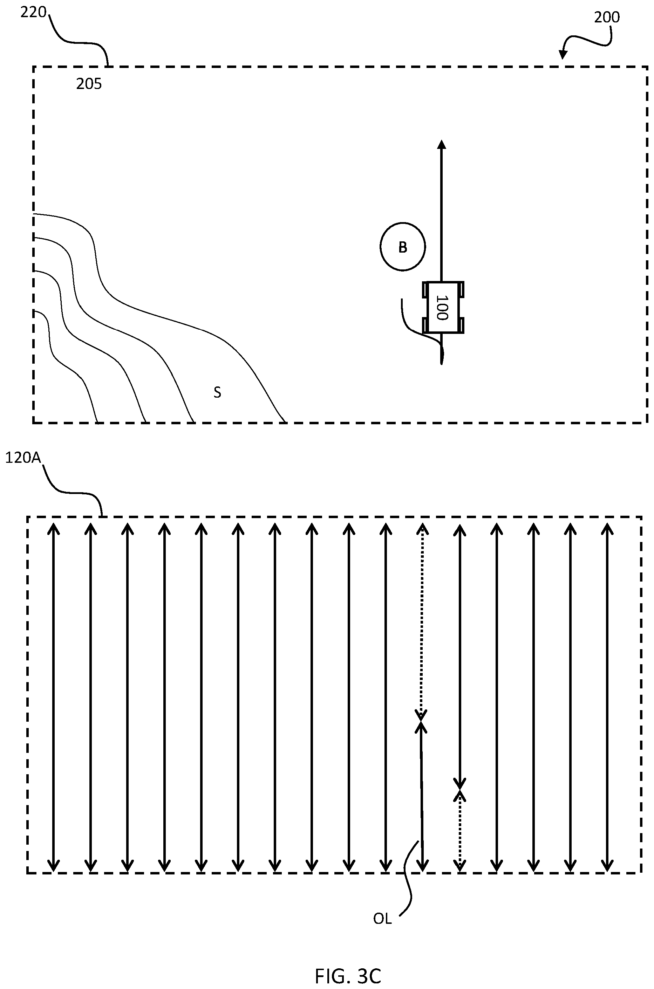

In figure 3C an example is shown where the robotic work tool 100 is able to pass by the obstacle B and continue operating. As is indicated in figure 3C, the next operating line (the one which enabled the robotic work tool to pass the obstacle) is marked as partially completed, noting where the robotic work tool started operating along that line. In this instance the uncompleted line may be operated in any direction.

In this example the robotic work tool 100 continues to operate without further incident and reaches the end side of the operating area 205. As it does so, it notes in the map application 120A that there are two partially completed lines and returns to complete these partially completed lines, and does so in the opposite direction - if an operation direction has been noted for the operating line - and thereby completes the operating line.

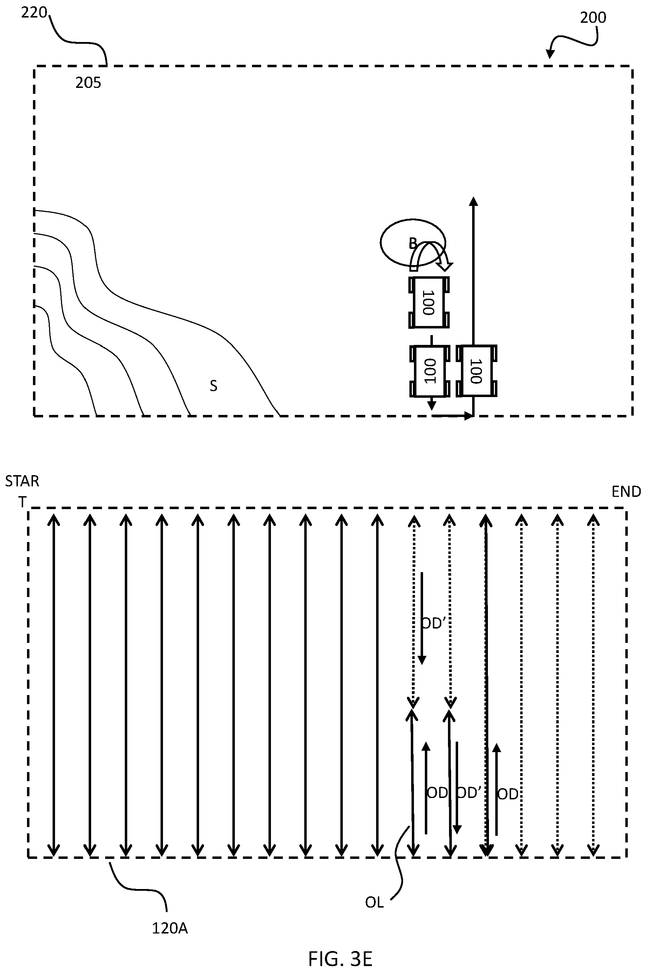

In figure 3E an example is shown where the robotic work tool 100 continues to operate along the adjacent operating line and again detects an obstacle, assumingly the same obstacle as it is already on the next adjacent line. As the robotic work tool 100 is now faced with a larger obstacle, the robotic work tool 100 is in some embodiments, configured to turn (180 degrees) and operate along the operating line in the opposite direction, thereby completing the operating line this side of the obstacle and then continue on a further adjacent operating line. This ensures that not too many lines are left uncompleted on a side of the obstacle. This is repeated until the obstacle is clear, or until the end side of the operating area 205 is reached.

Alternatively, the robotic work tool 100 is configured to reverse and switch to the adjacent operating line as an alternative to the 180 degree turn and completing the operating line by reversing to the start of the line. Or alternatively, leaving a portion of the line unattended for a future operation as will be discussed below.

To further reduce the risk of uncompleted lines on one side of the obstacle, the robotic work tool 100 is in some embodiments, configured to reverse to the start of the line before attempting to operate along that adjacent line in the operation direction, when reversing to switch operating lines. In some such embodiments, the robotic work tool 100 is configured to determine that the distance to the start of the operating line (the start being at the side of the operating area 205 from where the robotic work tool 100 started when operating on the operating line where the obstacle was detected) is below a threshold operating line distance, and if so reversing to the start of the operating line when switching lines, so that the adjacent operating line is serviced (or operate upon) from the start of the operating line. In some such embodiments, the threshold operating line distance is 1 m, 2 m, 3 m, 4 m, 5 m, 10 m, or any range there in between. In some alternative such embodiments, the threshold operating line distance is 1 x, 2 x, 3 x, 4 x, 5 x, 10 x the length of the robotic work tool 100, or any range there in between.

As is also indicated in figure 3E, the lines on top of the obstacle are, in some embodiments, to be operated upon in the opposite direction, i.e. the direction from the side of the operating area towards the detected obstacle (or turning point for the robotic work tool).

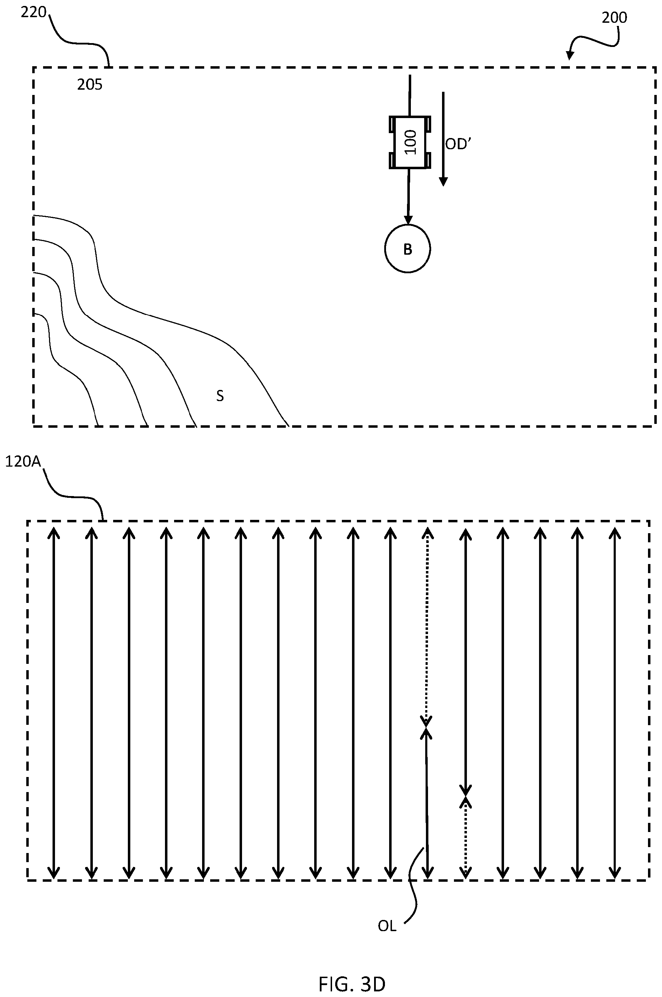

Returning to the example of figure 3D, where the robotic work tool 100 detects an obstacle when operating on an unfinished or uncompleted operating line from an opposite operating direction. As the operating line is operated as the unfinished portion of a partially completed operating line, there will be (at least) one other, previously recorded obstacle (or location thereof) on the same operating line as discussed in relation to figure 3B. In such cases the robotic work tool 100 is, in some embodiments, configured to determine if the obstacle is (to be regarded as) a same object as previously detected. Such a determination is in some embodiments performed by determining a distance d from the current obstacle (which in some embodiments is the location of detecting the obstacle) with a location of another obstacle on the same operating line, and if the distance between these two obstacle detections is smaller than a threshold obstacle distance, then the robotic work tool 100 concludes that the obstacle is (to be regarded as) a single obstacle and the operating line is thereby completed.

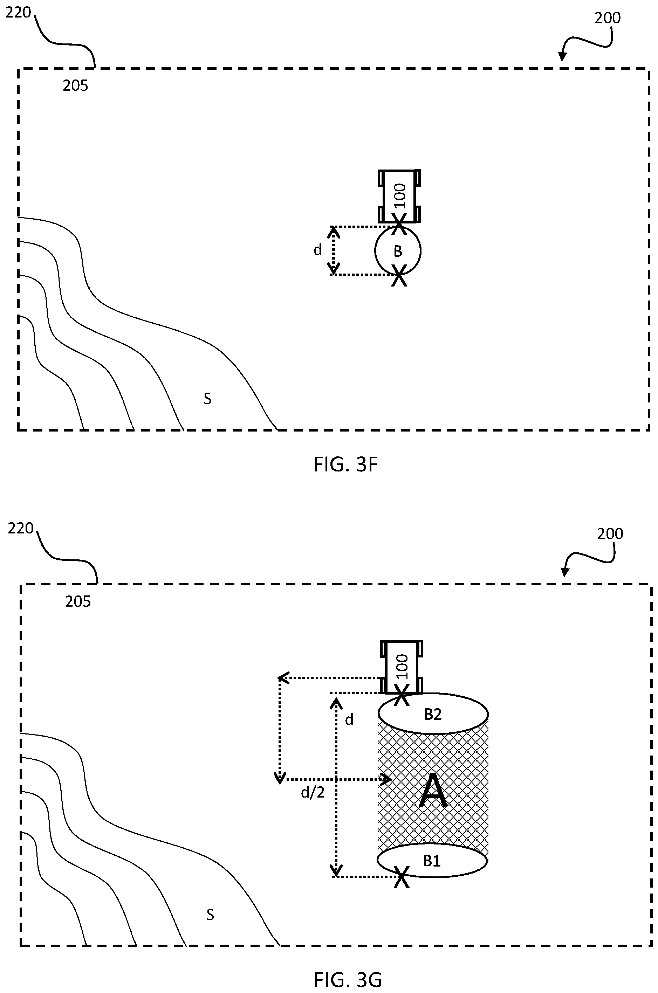

Figure 3F shows an example where there is a single obstacle B on the operating line, and where the distance d between the two detection locations (indicated by 'X's) is indicted. In some embodiments the threshold obstacle distance is is 1 m, 2 m, 3 m, 4 m, 5 m, 10 m, or any range there in between. In some alternative such embodiments, the threshold obstacle distance is 1 x, 2 x, 3 x, 4 x, 5 x, 10 x the length of the robotic work tool 100, or any range there in between. To assume that there is one single obstacle or to regard closely placed obstacles as one obstacle enables the robotic work tool 100 to reduce the risk of getting stuck between two obstacles while trying to service an area which is too small to be properly and safely operated in.

However, figure 3G shows an example where there are two (or more) obstacles on the operating line. In such an example, the distance between the two obstacles exceeds the threshold obstacle distance (or the two obstacles will be regarded as one obstacle) and the robotic work tool 100 notes or determines an area A in between the two obstacles, that is to be serviced. In some embodiments this area is serviced after the robotic work tool 100 has operated on all adjacent uncompleted operating lines that are detected next to one another. In some alternative or supplemental embodiments this area is serviced as the robotic work tool 100 operates on a next adjacent operating line and reaches a point halfway to the first obstacle B 1, i.e. have not detected an obstacle yet and thus passed the upper obstacle. In some alternative or supplemental embodiments this area is serviced as the robotic work tool 100 has covered all uncompleted operating lines.

In figure 3G it is shown how the robotic work tool 100 navigates, in some fashion, to the half-way point between the two obstacles, indicated d/2, and enters the area A from there. By navigating to the half-way point d/2 before entering the area A, the robotic work tool 100 is enabled to reduce the risk of getting entangled or collide with the obstacle(s) from a side of the obstacle(s).

The area A in between may then be serviced or operated upon in any number of manners. In some embodiments, the operating lines are followed inside the area A. In some embodiments, the robotic work tool 100 operates in the area in a systematic manner, for example by following the sides of the area possibly in smaller and smaller (decreasing) paths, such as decreasing rectangles. In some embodiments, the robotic work tool 100 operates in the area A in a random or semi-random manner.

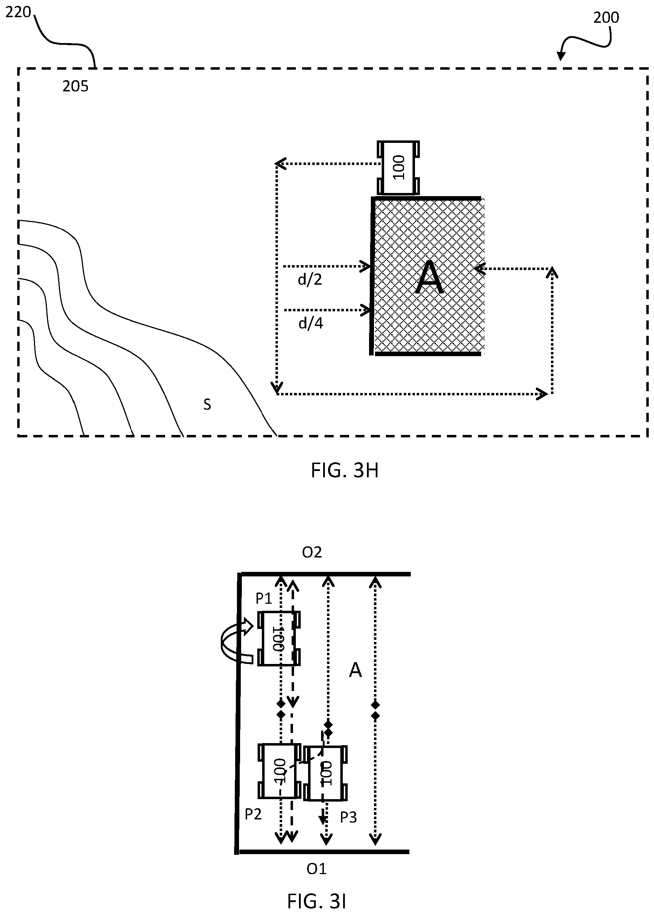

Figure 3H shows an example where the robotic work tool 100 is unable to enter the obstacle at the half-way point d/2. In some such embodiments, the robotic work tool 100 is configured to determine if the half the distance between the two obstacles exceeds the threshold obstacle distance, and if so reattempt to enter the area A on any of the quarter-way points d/4. If unsuccessful at one quarter-way point d/4, the robotic work tool 100 is, in some embodiments, configured to also try the other quarter-way point d/4.

In some embodiments, the robotic work tool is configured to determine that it is unable to enter the area A from one side (after one attempt or after several attempts) and in response thereto attempt to enter the area A from another side, for example the opposite side. Figure 3H shows an example of how the robotic work tool 100 attempts to enter an obstacle being a football (soccer) goal from one side and is unable so attempts to enter it from the opposite side. As a skilled person would understand there are many manners in which the robotic work tool 100 can travel to the other side, such as by following the area or by following operating lines that will take it there. The arrows in figure 3H (and in figure 3G9 are only for illustrative purposes and need not indicate a true path taken by the robotic work tool as many alternatives exist.

As mentioned above, the area A in between two obstacles may be operated in many different manners. Figure 3I shows an enlargement of the area A in between two obstacles O1, O2, such as for a football (soccer) goal. In some embodiments the robotic work tool 100 is configured to operate in the area A by following area operating lines (indicated by the double-headed dotted arrows). In some embodiments, the area operating lines will all (or at least some of them) have a middle point (indicated by the diamond(s) in figure 3I) and be grouped pairwise, the middle point being a start point. Alternatively, there is one area operating line with a single start (middle) point for each line.

In some embodiments the start point is not in the (exact) middle, but only at a distance removed from the end of the line so as to avoid getting stuck on an obstacle.

The robotic work tool 100 is configured to operate along these area operating lines by starting at the start (middle) point and operating in one direction until it detects a collision. This is indicated by point P1 in figure 3I. As the collision is detected, the robotic work tool 100 is configured, in some embodiments, to reverse, turn (180 degrees) and then operate in the other direction. This is the case when this is the first collision on the same operating line which indicates that the operating line on the other side of the start point has not been serviced yet. This is indicated by point P2 in figure 3I. As the second collision is detected, the robotic work tool is configured to reverse and switch to an adjacent operating line (this is indicated by point P3 in figure 3I) and continue in the same manner until the area A is completed. In some embodiments the reversal is to the start point whereby all area operating lines will have substantially a similar start point. In some embodiments, the reversal is a shorter distance, which should be enough to ensure or at least reduce the likelihood of getting stuck on an obstacle. In such embodiments, the start point(s) for that area operating line will be moved - especially of the reversal is for a reverse and switch. In figure 3I this is indicated by the dashed arrows and by the different positions of the diamonds.

The distance that the robotic work tool 100 reverses is in some embodiments half the distance between the ends of the area A (i.e. to the middle). In some embodiments, the distance that the robotic work tool 100 reverses is one third, one quarter or one fifth of the distance between the ends of the area A.

In some embodiments, the distance that the robotic work tool 100 reverses is 0.5 x, 1 x, 1.5 x, 2x or 2.5 x the length of the robotic work tool 100.

In some embodiments, the distance that the robotic work tool 100 reverses is 0.5, 1, 1.5 or 2 meters.

By returning to the middle point or a point at a distance from the side, as is shown in figure 3I, the robotic work tool 100 is enabled to reduce the risk of getting entangled in any obstacle, when turning or otherwise manoeuvring.

In some embodiments the area operating lines overlap or coincides with the operating lines. This allows for a consistent look to the resultant operating area. In some embodiments at least some or all of the area operating lines does not overlap or coincide with the operating lines. This allows for adapting to different widths of obstacles.

As a skilled person would understand, any obstacle encountered in the area A, can be dealt with as when dealing with an obstacle in the operating area, the area A in between the obstacles thus being operated upon as if it was an operating area in itself. Or, where the area operating lines are assigned a middle point, each half of the area A may be considered an operating area.

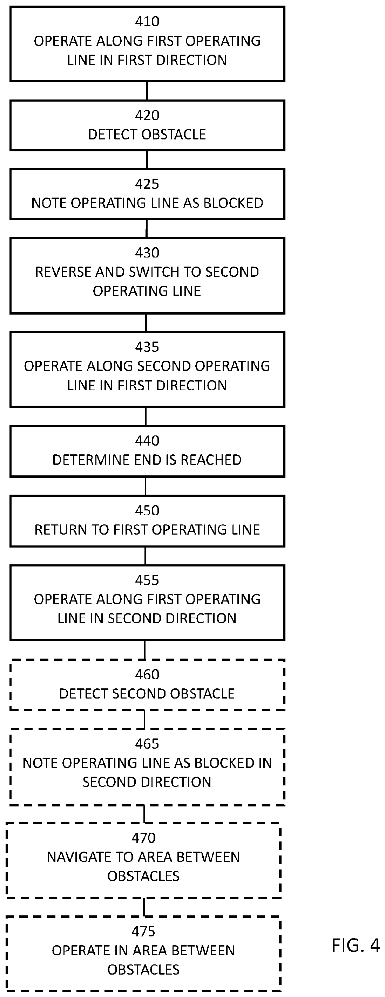

Figure 4 shows a flowchart for a general method according to herein. The method is for use in a robotic work tool as in figure 1 in a robotic work tool system 200 as in figure 2 in a manner as discussed above in relation to figures 1, 2, and 3A-I.

The method comprises the robotic work tool 100 operating 410 along a first operation line in a first direction and detecting 420 a first obstacle blocking the first operation line based on the obstacle sensor. The robotic work tool 100 then notes 425 the first operation line as being blocked in the first direction, thereby being partially completed, and reverses and switches 430 the robotic work tool to an adjacent second operation line. The robotic work tool 100 continues and operates 435 along the second operation line in the first direction. The method further comprises the robotic work tool 100 determining 440 that the robotic work tool 100 has reached an end side of the operating area 205 and then returns 450 to the first operation line at an opposite side and operates 455 along the first operation line in the second direction.

In some embodiments the method further comprises detecting 460 a second obstacle blocking the first operation line in the second direction, noting 465 the first operation line as being blocked in the second direction and navigating 470 the robotic work tool 100 to an in-between area A between the first and the second obstacle and operating 475 in the in-between area A.

In some such embodiments the method further comprises noting the location of the first obstacle as part of detecting the obstacle 420 or as part of noting 425 that the line is blocked and noting the location of the second obstacle as part of detecting the obstacle 460 or as part of noting 465 that the line is blocked. In such embodiments the method further comprises entering the area in-between through a half-way point as part of navigating 470 to the area.

## Claims

1. A robotic work tool (100) configured to operate in an operating area (205) in parallel operation lines, the robotic work tool (100) comprising an obstacle sensor and a controller (110), wherein the controller (110) is configured to:
operate along a first operation line in a first direction;
detect a first obstacle blocking the first operation line based on the obstacle sensor;
note the first operation line as being blocked in the first direction;
reverse the robotic work tool (100) and switch to an adjacent second operation line;
operate along the second operation line in the first direction; and
determine that the robotic work tool (100) has reached an end side of the operating area and return to the first operation line and operate along the first operation line in a second direction, **characterized in that** the controller (110) is further configured to:
detect a second obstacle blocking the first operation line in the second direction;
note the first operation line as being blocked in the second direction;
navigate the robotic work tool (100) to an in-between area (A) between the first and the second obstacle; and
operate in the in-between area (A), and wherein the controller (110) is further configured to:
note a location of the first obstacle;
note a location of the second obstacle;
enter the robotic work tool through a half-way point of the in-between area (A).

2. The robotic work tool (100) according to claim 1, wherein the controller (110) is further configured to, when detecting the second obstacle blocking the first operation line in the second direction then reverse the robotic work tool (100) and switch to an adjacent operation line and operate along that operation line in the second direction prior to operating in the in-between area (A)

3. The robotic work tool (100) according to claim 1 or 2, wherein the controller (110) is further configured to:
note the location of the first obstacle;
note the location of the second obstacle;
determine the extent of the in-between area (A) based on the location of the first obstacle and the location of the second obstacle.

4. The robotic work tool (100) according to claim 3, wherein the controller (110) is further configured to determine that the distance between the first obstacle and the second obstacle exceeds a threshold obstacle distance and then operate in the in-between area (A).

5. The robotic work tool (100) according to any of claims 1 to 4, wherein the controller (110) is further configured to operate in the in-between area (A) by operating along an area operation line from a point a distance away from one side of the area and out towards the side or out towards the opposite side of the area (A).

6. The robotic work tool (100) according to claim 5, wherein the distance is the middle of the area (A).

7. The robotic work tool (100) according to claim 5, wherein the distance is 1/3rd, 1/4th or 1/5th of the area (A).

8. The robotic work tool (100) according to claim 5, wherein the distance is 0.5, 1, 1.5, 2 or 2.5 times the length of the robotic work tool (100).

9. The robotic work tool (100) according to any preceding claim, wherein the controller (110) is further configured to:
operate along the second operation line in the first direction and detect the first obstacle blocking also the second operation line;
note the second operation line as being blocked in the first direction;
reverse the robotic work tool (100) and turn; and
operate along the second operation line in the second direction.

10. The robotic work tool (100) according to any preceding claim, wherein the controller (110) is further configured to
operate along the second operation line in the second direction from the opposite side and detect the second operation line being blocked;
note the second operation line as being blocked in the first direction;
reverse the robotic work tool (100) and switch to an adjacent third operation line; and
operate along the third operation line in the first direction.

11. The robotic work tool (100) according to any preceding claim, wherein the controller (110) is further configured to when returned to the first operation line then operate along the second operation line in the second direction, instead of operating along the first operation line.

12. The robotic work tool (100) according to any preceding claim, wherein the controller (110) is further configured to reverse the robotic work tool (100) and change to an adjacent second operation line by
reversing along the first operation line and then switching to the second operation line while moving forwards.

13. The robotic work tool (100) according to any of claims 1 to 11, wherein the controller (110) is further configured to reverse the robotic work tool (100) and change to an adjacent second operation line by
switching to the second operation line while reversing.

14. The robotic work tool (100) according to claim 12 and 13, wherein the controller (110) is further configured to determine that the robotic work tool (100) is operating on a slope and then selecting the manner of reversing and switching based on an incline of the slope.

15. The robotic work tool (100) according to any preceding claim, wherein the robotic work tool is a robotic lawnmower (100).

16. The robotic work tool (100) according to any of claims 1 to 14, wherein the robotic work tool is a robotic grinder (100).

17. A method for use in a robotic work tool (100) configured to operate in an operating area (205) in parallel operation lines, the robotic work tool (100) comprising an obstacle sensor (165), wherein the method steps are performed in a controller, the method comprises:
operating along a first operation line in a first direction;
detecting a first obstacle blocking the first operation line based on the obstacle sensor;
noting the first operation line as being blocked in the first direction;
reversing the robotic work tool (100) and switch to an adjacent second operation line;
operating along the second operation line in the first direction; and
determining that the robotic work tool (100) has reached an end side of the operating area (205) and returning to the first operation line and operating along the first operation line in a second direction, **characterized in that** the method further comprises:
detecting a second obstacle blocking the first operation line in the second direction;
noting the first operation line as being blocked in the second direction;
navigating the robotic work tool (100) to an in-between area (A) between the first and the second obstacle; and
operating in the in-between area (A), and wherein the method further comprises:
noting a location of the first obstacle;
noting a location of the second obstacle;
entering the robotic work tool through a half-way point of the in-between area (A).

## Patentansprüche

1. Roboterwerkzeug (100), das konfiguriert ist, um in einem Arbeitsbereich (205) in parallelen Arbeitslinien zu arbeiten, das Roboterwerkzeug (100) umfassend einen Hindernissensor und eine Steuerung (110), wobei die Steuerung (110) konfiguriert ist zum:
Arbeiten entlang einer ersten Arbeitslinie in einer ersten Richtung;
Erfassen eines ersten Hindernisses, das die erste Arbeitslinie blockiert, basierend auf dem Hindernissensor;
Vermerken der ersten Arbeitslinie als in der ersten Richtung blockiert;
Umkehren des Roboterwerkzeugs (100) und Wechseln zu einer angrenzenden zweiten Arbeitslinie;
Arbeiten entlang der zweiten Arbeitslinie in der ersten Richtung; und
Bestimmen, dass das Roboterwerkzeug (100) eine Endseite des Arbeitsbereichs erreicht hat, und Zurückkehren zu der ersten Arbeitslinie und Arbeiten entlang der ersten Arbeitslinie in einer zweiten Richtung,
**dadurch gekennzeichnet, dass** die Steuerung (110) ferner konfiguriert ist zum:
Erfassen eines zweiten Hindernisses, das die erste Arbeitslinie in der zweiten Richtung blockiert;
Vermerken der ersten Arbeitslinie als in der zweiten Richtung blockiert;
Navigieren des Roboterwerkzeugs (100) zu einem Zwischenbereich (A) zwischen dem ersten und dem zweiten Hindernis; und
Arbeiten in dem Zwischenbereich (A) und wobei die Steuerung (110) ferner konfiguriert ist zum:
Vermerken einer Lage des ersten Hindernisses;
Vermerken einer Lage des zweiten Hindernisses;
Eintretenlassen des Roboterwerkzeugs durch einen auf halbem Weg liegenden Punkt des Zwischenbereichs (A).

2. Roboterwerkzeug (100) nach Anspruch 1, wobei die Steuerung (110) ferner konfiguriert ist, um, wenn erfasst wird, dass das zweite Hindernis die erste Arbeitslinie in der zweiten Richtung blockiert, dann das Roboterwerkzeug (100) umzukehren und zu einer angrenzenden Arbeitslinie zu wechseln und entlang dieser Arbeitslinie in der zweiten Richtung zu arbeiten, bevor in dem Zwischenbereich (A) gearbeitet wird.

3. Roboterwerkzeug (100) nach Anspruch 1 oder 2, wobei die Steuerung (110) ferner konfiguriert ist zum:
Vermerken der Lage des ersten Hindernisses;
Vermerken der Lage des zweiten Hindernisses;
Bestimmen des Umfangs des Zwischenbereichs (A) basierend auf der Lage des ersten Hindernisses und der Lage des zweiten Hindernisses.

4. Roboterwerkzeug (100) nach Anspruch 3, wobei die Steuerung (110) ferner konfiguriert ist, um zu bestimmen, dass der Abstand zwischen dem ersten Hindernis und dem zweiten Hindernis einen Schwellenhindernisabstand überschreitet, und dann in dem Zwischenbereich (A) zu arbeiten.

5. Roboterwerkzeug (100) nach einem der Ansprüche 1 bis 4, wobei die Steuerung (110) ferner konfiguriert ist, um in dem Zwischenbereich (A) durch das Arbeiten entlang einer Bereichsarbeitslinie von einem Punkt in einem Abstand von einer Seite des Bereichs und nach außen zu der Seite hin oder nach außen zu der gegenüberliegenden Seite des Bereichs (A) hin zu arbeiten.

6. Roboterwerkzeug (100) nach Anspruch 5, wobei der Abstand die Mitte des Bereichs (A) ist.

7. Roboterwerkzeug (100) nach Anspruch 5, wobei der Abstand 1/3, 1/4 oder 1/5 des Bereichs (A) ist.

8. Roboterwerkzeug (100) nach Anspruch 5, wobei der Abstand das 0,5-, 1-, 1,5-, 2- oder 2,5-Fache der Länge des Roboterwerkzeugs (100) ist.

9. Roboterwerkzeug (100) nach einem der vorstehenden Ansprüche, wobei die Steuerung (110) ferner konfiguriert ist zum:
Arbeiten entlang der zweiten Arbeitslinie in der ersten Richtung und Erfassen des ersten Hindernisses, das ebenso die zweite Arbeitslinie blockiert;
Vermerken der zweiten Arbeitslinie als in der ersten Richtung blockiert;
Umkehren des Roboterwerkzeugs (100) und Wenden; und
Arbeiten entlang der zweiten Arbeitslinie in der zweiten Richtung.

10. Roboterwerkzeug (100) nach einem der vorstehenden Ansprüche, wobei die Steuerung (110) ferner konfiguriert ist zum
Arbeiten entlang der zweiten Arbeitslinie in der zweiten Richtung von der gegenüberliegenden Seite und Erfassen, dass die zweite Arbeitslinie blockiert ist;
Vermerken der zweiten Arbeitslinie als in der ersten Richtung blockiert;
Umkehren des Roboterwerkzeugs (100) und Wechseln zu einer angrenzenden dritten Arbeitslinie; und
Arbeiten entlang der dritten Arbeitslinie in der ersten Richtung.

11. Roboterwerkzeug (100) nach einem der vorstehenden Ansprüche, wobei die Steuerung (110) ferner konfiguriert ist, um, wenn zu der ersten Arbeitslinie zurückgekehrt wird, dann entlang der zweiten Arbeitslinie in der zweiten Richtung zu arbeiten, anstatt entlang der ersten Arbeitslinie zu arbeiten.

12. Roboterwerkzeug (100) nach einem der vorstehenden Ansprüche, wobei die Steuerung (110) ferner konfiguriert ist, um das Roboterwerkzeug (100) umzukehren und zu einer angrenzenden zweiten Arbeitslinie umzusteigen durch
Umkehren entlang der ersten Arbeitslinie und dann Wechseln zu der zweiten Arbeitslinie, während sich vorwärts bewegt wird.

13. Roboterwerkzeug (100) nach einem der Ansprüche 1 bis 11, wobei die Steuerung (110) ferner konfiguriert ist, um das Roboterwerkzeug (100) umzukehren und zu einer angrenzenden zweiten Arbeitslinie umzusteigen durch
Wechseln zu der zweiten Arbeitslinie, während umgekehrt wird.

14. Roboterwerkzeug (100) nach Anspruch 12 und 13, wobei die Steuerung (110) ferner konfiguriert ist, um zu bestimmen, dass das Roboterwerkzeug (100) an einem Hang arbeitet, und dann die Art des Umkehrens und des Wechselns basierend auf einer Neigung des Hangs auszuwählen.

15. Roboterwerkzeug (100) nach einem der vorstehenden Ansprüche, wobei das Roboterwerkzeug ein Roboterrasenmäher (100) ist.

16. Roboterwerkzeug (100) nach einem der Ansprüche 1 bis 14, wobei das Roboterwerkzeug ein Roboterschleifer (100) ist.

17. Verfahren zur Verwendung in einem Roboterwerkzeug (100), das konfiguriert ist, um in einem Arbeitsbereich (205) in parallelen Arbeitslinien zu arbeiten, das Roboterwerkzeug (100) umfassend einen Hindernissensor (165), wobei die Verfahrensschritte in einer Steuerung ausgeführt werden, das Verfahren umfasst:
Arbeiten entlang einer ersten Arbeitslinie in einer ersten Richtung;
Erfassen eines ersten Hindernisses, das die erste Arbeitslinie blockiert, basierend auf dem Hindernissensor;
Vermerken der ersten Arbeitslinie als in der ersten Richtung blockiert;
Umkehren des Roboterwerkzeugs (100) und Wechseln zu einer angrenzenden zweiten Arbeitslinie;
Arbeiten entlang der zweiten Arbeitslinie in der ersten Richtung; und
Bestimmen, dass das Roboterwerkzeug (100) eine Endseite des Arbeitsbereichs (205) erreicht hat, und Zurückkehren zu der ersten Arbeitslinie und Arbeiten entlang der ersten Arbeitslinie in einer zweiten Richtung,
**dadurch gekennzeichnet, dass** das Verfahren ferner umfasst:
Erfassen eines zweiten Hindernisses, das die erste Arbeitslinie in der zweiten Richtung blockiert;
Vermerken der ersten Arbeitslinie als in der zweiten Richtung blockiert;
Navigieren des Roboterwerkzeugs (100) zu einem Zwischenbereich (A) zwischen dem ersten und dem zweiten Hindernis; und
Arbeiten in dem Zwischenbereich (A) und wobei das Verfahren ferner umfasst:
Vermerken einer Lage des ersten Hindernisses;
Vermerken einer Lage des zweiten Hindernisses;
Eintretenlassen des Roboterwerkzeugs durch einen auf halbem Weg liegenden Punkt des Zwischenbereichs (A).

## Revendications

1. Outil de travail robotisé (100) configuré pour opérer dans une zone d'opération (205) dans des lignes d'opération parallèles, l'outil de travail robotisé (100) comprenant un capteur d'obstacles et un dispositif de commande (110), dans lequel le dispositif de commande (110) est configuré pour :
opérer le long d'une première ligne d'opération dans une première direction ;
détecter un premier obstacle bloquant la première ligne d'opération sur la base du capteur d'obstacles ;
noter que la première ligne d'opération est bloquée dans la première direction ;
inverser l'outil de travail robotisé (100) et basculer sur une deuxième ligne d'opération adjacente ;
opérer le long de la deuxième ligne d'opération dans la première direction ; et
déterminer que l'outil de travail robotisé (100) a atteint un côté d'extrémité de la zone d'opération et revenir à la première ligne d'opération et opérer le long de la première ligne d'opération dans une seconde direction, **caractérisé en ce que** le dispositif de commande (110) est en outre configuré pour :
détecter un second obstacle bloquant la première ligne d'opération dans la seconde direction ;
noter que la première ligne d'opération est bloquée dans la seconde direction ;
diriger l'outil de travail robotisé (100) vers une zone intermédiaire (A) entre le premier et le second obstacle ; et
opérer dans la zone intermédiaire (A), et dans lequel le dispositif de commande (110) est en outre configuré pour :
noter un emplacement du premier obstacle ;
noter un emplacement du second obstacle ;
introduire l'outil de travail robotisé par un point médian de la zone intermédiaire (A).

2. Outil de travail robotisé (100) selon la revendication 1, dans lequel le dispositif de commande (110) est en outre configuré pour, lors de la détection du second obstacle bloquant la première ligne d'opération dans la seconde direction, inverser alors l'outil de travail robotisé (100) et basculer sur une ligne d'opération adjacente et opérer le long de cette ligne d'opération dans la seconde direction avant d'opérer dans la zone intermédiaire (A)

3. Outil de travail robotisé (100) selon la revendication 1 ou 2, dans lequel le dispositif de commande (110) est en outre configuré pour :
noter l'emplacement du premier obstacle ;
noter l'emplacement du second obstacle ;
déterminer l'étendue de la zone intermédiaire (A) sur la base de l'emplacement du premier obstacle et de l'emplacement du second obstacle.

4. Outil de travail robotisé (100) selon la revendication 3, dans lequel le dispositif de commande (110) est en outre configuré pour déterminer que la distance entre le premier obstacle et le second obstacle dépasse une distance seuil d'obstacles, et opérer alors dans la zone intermédiaire (A).

5. Outil de travail robotisé (100) selon l'une quelconque des revendications 1 à 4, dans lequel le dispositif de commande (110) est en outre configuré pour opérer dans la zone intermédiaire (A) en opérant le long d'une ligne d'opération de zone à partir d'un point situé à une certaine distance d'un côté de la zone et vers le côté ou vers le côté opposé de la zone (A).

6. Outil de travail robotisé (100) selon la revendication 5, dans lequel la distance est le milieu de la zone (A).

7. Outil de travail robotisé (100) selon la revendication 5, dans lequel la distance est de 1/3, 1/4^{e} ou 1/5^{e} de la zone (A).

8. Outil de travail robotisé (100) selon la revendication 5, dans lequel la distance est de 0,5, 1, 1,5, 2 ou 2,5 fois la longueur de l'outil de travail robotisé (100).

9. Outil de travail robotisé (100) selon l'une quelconque revendication précédente, dans lequel le dispositif de commande (110) est en outre configuré pour :
opérer le long de la deuxième ligne d'opération dans la première direction et détecter le premier obstacle bloquant également la deuxième ligne d'opération ;
noter que la deuxième ligne d'opération est bloquée dans la première direction ;
inverser l'outil de travail robotisé (100) et tourner ; et
opérer le long de la deuxième ligne d'opération dans la seconde direction.

10. Outil de travail robotisé (100) selon l'une quelconque revendication précédente, dans lequel le dispositif de commande (110) est en outre configuré pour :
opérer le long de la deuxième ligne d'opération dans la seconde direction à partir du côté opposé et détecter que la deuxième ligne d'opération est bloquée ;
noter que la deuxième ligne d'opération est bloquée dans la première direction ;
inverser l'outil de travail robotisé (100) et basculer sur une troisième ligne d'opération adjacente ; et
opérer le long de la troisième ligne d'opération dans la première direction.

11. Outil de travail robotisé (100) selon l'une quelconque revendication précédente, dans lequel le dispositif de commande (110) est en outre configuré pour, lorsqu'il est revenu à la première ligne d'opération, opérer le long de la deuxième ligne d'opération dans la seconde direction, au lieu d'opérer le long de la première ligne d'opération.

12. Outil de travail robotisé (100) selon l'une quelconque revendication précédente, dans lequel le dispositif de commande (110) est en outre configuré pour inverser l'outil de travail robotisé (100) et passer à une deuxième ligne d'opération adjacente par
l'inversion le long de la première ligne d'opération puis le basculement sur la deuxième ligne d'opération tout en avançant.

13. Outil de travail robotisé (100) selon l'une quelconque des revendications 1 à 11, dans lequel le dispositif de commande (110) est en outre configuré pour inverser l'outil de travail robotisé (100) et passer à une deuxième ligne d'opération adjacente par
le basculement sur la deuxième ligne d'opération pendant l'inversion.

14. Outil de travail robotisé (100) selon la revendication 12 et 13, dans lequel le dispositif de commande (110) est en outre configuré pour déterminer que l'outil de travail robotisé (100) opère sur une pente et sélectionner alors le mode d'inversion et de basculement sur la base d'une inclinaison de la pente.

15. Outil de travail robotisé (100) selon l'une quelconque revendication précédente, dans lequel l'outil de travail robotisé est une tondeuse à gazon robotisée (100).

16. Outil de travail robotisé (100) selon l'une quelconque des revendications 1 à 14, dans lequel l'outil de travail robotisé est une ponceuse robotisée (100).

17. Procédé destiné à être utilisé dans un outil de travail robotisé (100) configuré pour opérer dans une zone d'opération (205) dans des lignes d'opération parallèles, l'outil de travail robotisé (100) comprenant un capteur d'obstacles (165), dans lequel les étapes de procédé sont effectuées dans un dispositif de commande, le procédé comprend :
le fait d'opérer le long d'une première ligne d'opération dans une première direction ;
la détection d'un premier obstacle bloquant la première ligne d'opération sur la base du capteur d'obstacles ;
le fait de noter que la première ligne d'opération est bloquée dans la première direction ;
l'inversion de l'outil de travail robotisé (100) et le basculement sur une deuxième ligne d'opération adjacente ;
le fait d'opérer le long de la deuxième ligne d'opération dans la première direction ; et
la détermination du fait que l'outil de travail robotisé (100) a atteint un côté d'extrémité de la zone d'opération (205) et le retour vers la première ligne d'opération et le fait d'opérer le long de la première ligne d'opération dans une seconde direction, **caractérisé en ce que** le procédé comprend en outre :
la détection d'un second obstacle bloquant la première ligne d'opération dans la seconde direction ;
le fait de noter que la première ligne d'opération est bloquée dans la seconde direction ;
le fait de diriger l'outil de travail robotisé (100) vers une zone intermédiaire (A) entre le premier et le second obstacle ; et
le fait d'opérer dans la zone intermédiaire (A), et dans lequel le procédé comprend en outre : le fait de noter un emplacement du premier obstacle ;
le fait de noter un emplacement du second obstacle ;
l'introduction de l'outil de travail robotisé par un point médian de la zone intermédiaire (A).
